# EUROPÄISCHE PATENTSCHRIFT

(11) **EP 2 946 180 B1**
(45) Veröffentlichungstag und Bekanntmachung des Hinweises auf die Patenterteilung: **06.06.2018**
(21) Anmeldenummer: 14700326.3
(22) Anmeldetag: 04.01.2014
(51) Int. Cl.: G01G 23/18, G01G 19/08, G01G 19/62, G01G 23/00, B60G 17/019, B60W 40/13

(54) **VERFAHREN UND VORRICHTUNG ZUR ANZEIGE DER BELADUNG UND/ODER DER ACHSLAST EINES FAHRZEUGS**
METHOD AND APPARATUS FOR DISPLAYING THE LOADING AND/OR THE AXIAL LOAD OF A VEHICLE
PROCÉDÉ ET DISPOSITIF POUR L'AFFICHAGE DE LA CHARGE D'UN VÉHICULE ET/OU DE SA CHARGE SUR ESSIEU

(30) Priorität: 19.01.2013 DE 102013000874
(43) Veröffentlichungstag der Anmeldung: 25.11.2015
(73) Patentinhaber: WABCO GmbH, 30453 Hannover (DE)
(72) Erfinder: BARLSEN, Holger, 30851 Langenhagen (DE); STENDER, Axel, 31787 Hameln (DE)
(74) Vertreter: Lauerwald, Jörg
(86) Internationale Anmeldenummer: PCT/EP2014/000003
(87) Internationale Veröffentlichungsnummer: WO 2014/111238

(56) Entgegenhaltungen:
- DE-A1- 2 553 350
- DE-A1- 4 214 785
- DE-A1- 10 302 776
- DE-A1- 19 751 908
- DE-A1-102006 039 764
- US-A1- 2005 040 611
- US-B2- 7 395 184

## Beschreibung

Die Erfindung betrifft ein Verfahren gemäß dem Oberbegriff des Anspruchs 1 sowie eine Vorrichtung gemäß dem Oberbegriff des Anspruchs 7. Moderne Zugfahrzeuge und Anhängefahrzeuge, insbesondere mit elektronischem Bremssystem, verfügen über eine Achslastermittlung. Diese kann über einen Drucksensor für luftgefederte oder hydraulisch gefederte Fahrzeuge, als auch über einen Wegsensor für mechanisch gefederte Fahrzeuge realisiert sein. Aus der ermittelten tatsächlichen Achslast kann auf die tatsächliche Beladung insgesamt und auf das Erreichen der maximal zulässigen Achslast/Beladung geschlossen werden. Achslast und Beladung werden nachfolgend auch durch den Begriff Beladungszustand ausgedrückt. Vorzugsweise geht es um die Erfassung und Einhaltung der Achslast. Aus den Daten eines Sensors oder mehrerer gekoppelter Sensoren kann auf die Achslast bzw. auf die Beladung geschlossen werden.

Speziell bei Fahrzeugen, die von oben mit Schüttgütern beladen werden, insbesondere bei Muldenkipperfahrzeugen, ist es hilfreich, den Beladungszustand während des Beladens zu überwachen. Der Beladungsvorgang soll rechtzeitig beendet werden, ohne dass das Fahrzeug überladen wird. Der Fahrer soll einerseits die Sicherheit haben, dass sein Fahrzeug nicht überladen ist. Andererseits soll die maximal mögliche Beladung des Fahrzeugs ausgenutzt werden.

Aus der US 7,395,184 B2 ist ein Kipplaster mit drei farbigen Lampen auf dem Dach der Fahrerkabine bekannt. In Abhängigkeit von der Nennbeladung zeigen die Lampen die aktuelle Beladung an. Je nach aktueller Beladung leuchten keine Lampen, eine grüne Lampe, eine orangefarbene Lampe oder eine rote Lampe.

In der DE 197 51 908 A1 ist ein Fahrzeug mit roten und grünen Lampen am Fahrerpult offenbart. Im Bereich der Radfederung ist ein Grenzschalter vorgesehen, der den Zustand der Achse im Grenzbereich der Achsenbelastung erfasst und über die Lampen am Fahrerpult rot oder grün anzeigt.

Die US 2005/0040611 A1 offenbart eine pneumatische, beladungsabhängige Niveauregelung für ein Fahrzeug. Bei Überlast erhält der Bediener ein optisches oder akustisches Signal. Im Übrigen ist für die Anzeige des Beladungszustands eine optische Anzeige (Display) vorgesehen.

DE 42 14 785 A1 offenbart eine Anzeigevorrichtung zur Überwachung des zulässigen Gesamtgewichts von Nutzfahrzeugen mit einer Anordnung zwischen Achse und Fahrzeugrahmen, wobei die lastabhängige Differenz dieses Abstandes einstellbar anzeigbar ist.

DE 25 53 350 A1 offenbart ein Lastüberwachungssystem für ein Straßenfahrzeug.

DE 103 02 776 A1 offenbart ein Verfahren zur Erzeugung eines durch Signalfrequenz und Signalamplitude beschreibbaren Hinweissignals in einem Fahrzeug zur Beachtung durch einen Fahrzeuginsassen, vorzugsweisedurch einen Fahrzeugführer, wobei die Signalfrequenz oder/und die Signalamplitude des Hinweissignals während der Signaldauer veränderbar ist.

Grundsätzlich ist es sinnvoll, für die Anzeige des Beladungszustands wenigstens drei verschiedene Zustände zu unterscheiden, nämlich
a) der aktuelle Beladungszustand befindet sich unterhalb eines zulässigen Maximums,
b) das zulässige Maximum des Beladungszustands ist erreicht,
c) das zulässige Maximum ist überschritten, eine Überlast liegt vor.

Aufgabe der vorliegenden Erfindung ist die Anzeige des Beladungszustands derart, dass eine möglichst hohe Aufmerksamkeit auf Seiten des Benutzers erzielt wird bzw. der Benutzer auf möglichst einfache Weise über den Beladungszustand informiert wird.

Das erfindungsgemäße Verfahren löst die genannte Aufgabe durch die Merkmale des Anspruchs 1. Bei Erreichen des zulässigen Maximums wird ein Dauersignal ausgegeben, bei Überlast ein pulsierendes Signal. Als pulsierendes Signal wird ein sichtbar oder hörbar moduliertes Signal verstanden, vorzugsweise im Sinne einer Amplitudenmodulation. Dazu zählt auch ein taktweises Ein- und Ausschalten. Es können aber auch Farbe und/oder Frequenz moduliert sein. Unterhalb des zulässigen Maximums wird ein Signal ausgegeben, welches sich vom Signal bei Erreichen des zulässigen Maximums unterscheidet. Bei einem nicht-erfindungsgemäßen Verfahren, kann unterhalb des zulässigen Maximums kein Signal ausgegeben werden. "Kein Signal" kann bei diesem nicht-erfindungsgemäßen Verfahren als Signal verstanden werden. Das Signal gemäß Zustand a) pulsiert auf andere Art als das Signal gemäß Zustand c). Das Signal gemäß Zustand c), welches die Überlast anzeigt, sollte auffälliger sein als das Signal gemäß Zustand a).

Die Ausbildung des pulsierenden Signals gemäß Zustand a) ist derart, dass dieses pulsierende Signal ein anderes Verhältnis von Einschaltphase zu Ausschaltphase aufweist als das pulsierende Signal gemäß Zustand c), insbesondere ein größeres Verhältnis von Einschaltphase zu Ausschaltphase. Letzteres bedeutet, dass im Zustand gemäß c) die Einschaltphase kleiner oder kürzer ist als im Zustand a).

Bevorzugt ist eine nahezu rechteckförmige Modulation von Helligkeit und/oder Lautstärke im Sinne eines Ein- und Ausschaltens, etwa wie beim Blinken einer Lampe. Es kann aber auch ein an- und abschwellendes Signal als pulsierendes Signal gegeben sein, etwa ein Heulton.

Verwendet werden können optische oder akustische Signalquellen oder beide in Kombination miteinander. Vorteilhaft ist die Verwendung von optischen und akustischen Signalquellen, deren Pulsieren aufeinander abgestimmt ist, zumindest hinsichtlich des Beginns eines jeden Pulsationszyklus. In noch engerer Abstimmung können auch Einschaltzeiten und Ausschaltzeiten von optischen und akustischen Signalquellen übereinstimmen.

Nach einem weiteren Gedanken der Erfindung ist vorgesehen, dass während des Zustands a), also bei einem Beladungszustand unterhalb des zulässigen Maximums, ein pulsierendes Signal ausgegeben wird, insbesondere mit in Abhängigkeit vom Beladungszustand zunehmender Frequenz. Je höher die Beladung ist, umso größer soll die Frequenz sein. Dadurch wird die beim Beladen auftretende Veränderung des Beladungszustands sichtbar oder hörbar signalisiert. Durch die zunehmende Frequenz ist ein Übergang zum Dauersignal bei Erreichen des zulässigen Maximums gut möglich und wird vom Bediener ohne Weiteres verstanden.

Insbesondere weist das pulsierende Signal gemäß Zustand a) etwa gleich lange Einschaltphasen und Ausschaltphasen auf, während das pulsierende Signal gemäß Zustand c) kürzere Einschaltphasen als Ausschaltphasen aufweist, vorzugsweise im Verhältnis 1 zu 3, 1 zu 4 oder kleiner.

Vorteilhafterweise ist das Signal gemäß Zustand c) zumindest Frequenz-moduliert und das Signal gemäß Zustand a) insbesondere nur Amplituden-moduliert. Der Unterschied zwischen den Zuständen wird dadurch noch deutlicher.

Nach einem weiteren Gedanken der Erfindung werden genau eine akustische Signalquelle oder eine optische Signalquelle oder je eine akustische und eine optische Signalquelle verwendet. Der apparative Aufwand ist dadurch besonders gering. Die Signalquellen sollten gut sichtbar bzw. hörbar angeordnet sein. Sofern eine akustische und eine optische Signalquelle verwendet werden, sind diese vorzugsweise miteinander synchronisiert.

Die Anzeige des Beladungszustands muss nicht permanent erfolgen. In Fortbildung der Erfindung ist vorgesehen, dass der Beladungszustand durch wenigstens einen Sensor detektiert wird, insbesondere mittelbar durch Druck- oder Wegsensoren, und dass die Anzeige des Beladungszustands aktiviert wird, sobald wenigstens ein Sensor eine Überschreitung eines definierten unteren Grenzwertes oder eine Erhöhung des Beladungszustands um einen definierten Betrag detektiert. Die nicht aktivierte Anzeige durch die Signalquellen stellt zusätzlich zu den Zuständen a), b) und c) einen vierten, vorgelagerten Zustand dar.

Vorteilhafterweise wird die Anzeige des Beladungszustands aktiviert, sobald der wenigstens eine Sensor eine Erhöhung des Beladungszustands um etwa 20% detektiert oder sobald der Sensor mehr als 20% des zulässigen Maximums detektiert. Bei dem zulässigen Maximum kann es sich um die maximal zulässige Achslast, das maximal zulässige Gesamtgewicht oder die maximal zulässige Beladung (insgesamt oder im Bereich der Achse) handeln. Insbesondere bezieht sich das zulässige Maximum auf das zulässige Gesamtgewicht bzw. die zulässige Achslast.

Nach einem weiteren Gedanken der Erfindung wird eine Überlast gemäß Zustand c) erst dann angezeigt, wenn das zulässige Maximum um einen definierten Betrag überschritten ist, insbesondere um etwa 2%. Der definierte Betrag sollte mögliche Messfehler und/oder gesetzliche Vorgaben berücksichtigen. So ist in Deutschland eine Überschreitung des zulässigen Maximums um bis zu 2% zulässig.

Die erfindungsgemäße Vorrichtung weist die Merkmale des Anspruchs 7 auf. Unter anderem vorgesehen ist eine Steuereinheit zur Verarbeitung von Daten der Sensoren und zur Ansteuerung der Signalquellen. Mit der Steuereinheit ist wenigstens eine der Signalquellen zur Ausgabe von Signalen wie folgt ansteuerbar:
- Ausgabe eines Dauersignals bei Erreichen eines zulässigen Maximums von Beladung/Achslast,
- Ausgabe eines pulsierenden Signals bei überschrittenem zulässigen Maximum.

Der Steuereinheit ist vorteilhafterweise wenigstens eine optische und/oder akustische Signalquelle zugeordnet.

Erfindungsgemäß kann der Steuereinheit wenigstens ein Sensor zur zumindest mittelbaren Erfassung der Beladung/Achslast zugeordnet sein, insbesondere mit einer Verbindung über eine Leitung oder Datenschnittstelle.

Gegenstand der Erfindung ist auch ein Steuergerät gemäß Anspruch 10, insbesondere zur Durchführung des erörterten Verfahrens.

Schließlich ist Gegenstand der Erfindung auch ein Fahrzeug, insbesondere Zugfahrzeug, Anhängefahrzeug, Auflieger oder Muldenkipperfahrzeug mit einer erfindungsgemäßen Vorrichtung. Erfindungsgemäß kann das Fahrzeug eine Signalquelle nahe einem Fahrzeugheck, nämlich seitlich, insbesondere links, und im Bereich eines hinteren Fahrzeug-Drittels aufweisen.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: eine schematische Darstellung eines Anhängefahrzeugs in der Draufsicht, nämlich eines Aufliegers,
- Fig. 2: eine mögliche Signalfolge beim Beladen des Anhängefahrzeugs.

Ein Auflieger 10 mit drei Achsen 11 ist mit einer Luftfederung und einer elektropneumatischen Bremse, welche auch als elektronische Bremse bezeichnet wird, ausgestattet. Zur elektronischen Bremse gehört eine elektronische Schalteinheit 12. Diese empfängt direkt oder über eine Datenschnittstelle, zum Beispiel einen CAN-Bus, Daten von Sensoren.

Die Achsen 11 weisen beidseitig Luftfedern 13 auf. Wenigstens einer der Luftfedern ist ein Balgdrucksensor zugeordnet. Die über den Balgdrucksensor ermittelten Daten stehen in der elektronischen Schalteinheit 12 zur Verfügung. Veränderungen des Balgdruckes beim Beladen des Aufliegers 10 korrelieren mit den Veränderungen der Achslasten und der Beladung. Durch Verknüpfung der Balgdrücke verschiedener Achsen ist die Beladung insgesamt noch genauer ermittelbar.

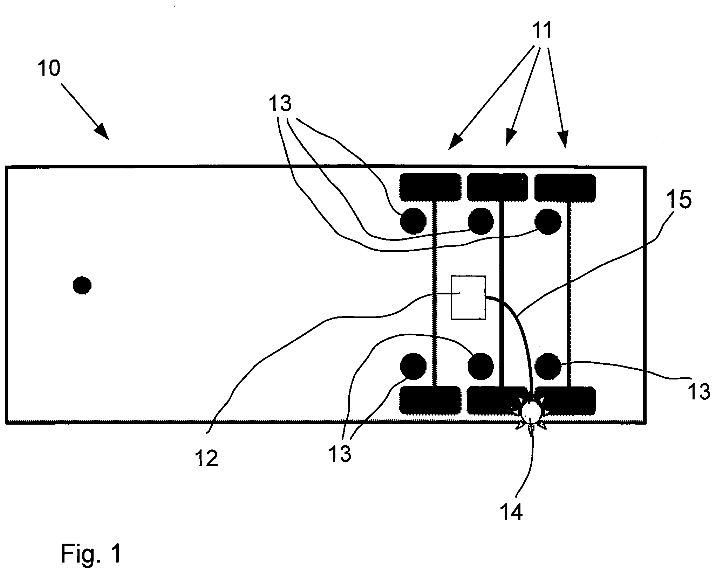

Die elektronische Schalteinheit 12 ist direkt oder über eine Datenschnittstelle mit einer Signalquelle 14 verbunden. Im vorliegenden Fall ist die Signalquelle 14 eine Warnlampe und über eine Leitung 15 mit der Schalteinheit 12 verbunden. Alternativ oder zusätzlich kann eine Hupe vorgesehen sein. Die Signalquelle 14 ist am Auflieger 10 seitlich, im Bereich der hinteren Achsen 11 gut sichtbar angeordnet, gemäß Fig. 1 auf der linken Seite.

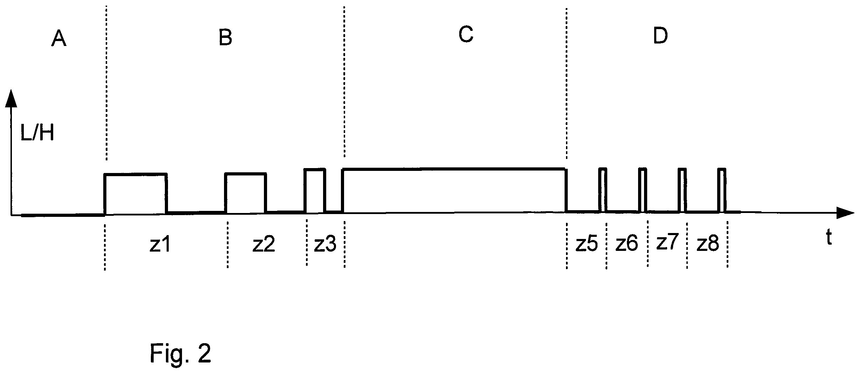

Der Auflieger 10 ist in nicht gezeigter Weise zur Aufnahme von schüttfähigen Gütern vorgesehen. Fig. 2 zeigt die Aktivität der Signalquelle 14 beim kontinuierlichen Beladen des Aufliegers 10 mit einem Schüttgut. Entlang der waagerechten Achse ist der Zeitverlauf (t) dargestellt, entlang der vertikalen Achse die von der Signalquelle 14 erzeugte Helligkeit (H) bzw. Lautstärke (L). Es werden im Zeitverlauf vier Abschnitte A, B, C und D unterschieden.

Während des Abschnitts A befindet sich der Auflieger 10 im Stand und ohne Beladung bzw. mit geringer Beladung. Sobald der Balgdrucksensor eine Zunahme des Balgdrucks um einen definierten Wert registriert, zum Beispiel um 20% des zulässigen Maximums, beginnt Abschnitt B. Die Signalquelle 14 blinkt (oder hupt), und zwar bei zunehmender Beladung mit zunehmender Frequenz. Sobald das zulässige Maximum der Beladung bzw. Achslast erreicht ist, beginnt Abschnitt C und die Signalquelle 14 leuchtet dauerhaft und/oder gibt einen Dauerton aus. Bei weiterer Zunahme der Beladung/Achslast beginnt Abschnitt D und die Signalquelle 14 blinkt und/oder hupt wieder mit einer definierten Frequenz.

Das Signal gemäß Abschnitt D soll eine andere Charakteristik aufweisen als das Signal in Abschnitt B. Im vorliegenden Beispiel ist vorgesehen, dass das Signal in Abschnitt B ein Rechtecksignal ist, bei dem innerhalb jeder Periode Z1, Z2, Z3 die Einschaltzeit ungefähr so groß ist wie die Ausschaltzeit. Demgegenüber ist in Abschnitt D in jeder Periode Z5 bis Z8 die Einschaltzeit deutlich kürzer als die Ausschaltzeit, nämlich etwa im Verhältnis 1 zu 4. Bezogen auf die jeweilige Länge der Perioden Z5 bis Z8 ergibt sich ein Anteil der Einschaltzeit an der Periodenlänge von 1/5 und ein Anteil der Ausschaltzeit an der Periodenlänge von 4/5.

In einem nicht graphisch dargestellten Beispiel wird bei leerem Fahrzeug, also in Abschnitt A, ein Signal mit einer konstanten Frequenz von insbesondere 0,5 Herz ausgegeben, bei gleicher Einschalt- und Ausschaltzeit je Periode. Sobald die Beladung zunimmt, erhöht sich die Frequenz mit der Beladung kontinuierlich bis etwa 4 Herz. Bei Erreichen des zulässigen Maximums/der maximalen Beladung wird ein Dauersignal ausgegeben, entsprechend Abschnitt C in Fig. 2. Für das Erreichen der maximalen Beladung kann eine Sicherheitsmarge vorgegeben werden. Beispielsweise gilt die maximale Beladung als erreicht, wenn 95% der maximal zulässigen Achslast vorliegt. Bei Überschreiten der maximal zulässigen Achslast wird ein Signal entsprechend Abschnitt D in Fig. 2 ausgegeben, hier mit etwa 400 Millisekunden Einschaltzeit und 1600 Millisekunden Ausschaltzeit je Periode.

## Patentansprüche

1. Verfahren zur Anzeige der Beladung und/oder der Achslast eines Fahrzeugs beim Beladen desselben, unter Verwendung von einer oder mehreren optischen und/oder akustischen Signalquellen (14), wobei unterschiedliche Signale vorgesehen sind für die Zustände
a) Achslast/Beladung unterhalb eines zulässigen Maximums,
b) zulässiges Maximum erreicht,
c) zulässiges Maximum überschritten/Überlast,
wobei bei Erreichen des zulässigen Maximums ein Dauersignal ausgegeben wird, und dass bei Überlast ein pulsierendes Signal ausgegeben wird, wobei während des Zustands a) - bei einer Beladung/Achslast unterhalb des zulässigen Maximums - ein pulsierendes Signal ausgegeben wird, insbesondere mit in Abhängigkeit von der Beladung/Achslast zunehmender Frequenz **dadurch gekennzeichnet, dass** das pulsierende Signal gemäß Zustand a) auf andere Art pulsiert als das pulsierende Signal gemäß Zustand c) wobei das pulsierende Signal gemäß Zustand a) ein anderes Verhältnis von Einschaltphase zu Ausschaltphase aufweist als das pulsierende Signal gemäß Zustand c), insbesondere ein größeres Verhältnis von Einschaltphase zu Ausschaltphase.

2. Verfahren nach Anspruch 1, **dadurch gekennzeichnet, dass** das pulsierende Signal gemäß Zustand a) etwa gleich lange Einschaltphasen und Ausschaltphasen aufweist, und dass das pulsierende Signal gemäß Zustand c) kürzere Einschaltphasen als Ausschaltphasen aufweist, insbesondere im Verhältnis 1 zu 3 oder 1 zu einer Zahl, die größer als 3 ist.

3. Verfahren nach Anspruch 1 oder einem der weiteren Ansprüche, **dadurch gekennzeichnet, dass** das Signal gemäß Zustand c) zumindest Frequenz-moduliert ist und dass das Signal gemäß Zustand a) vorzugsweise nur Amplituden-moduliert ist.

4. Verfahren nach Anspruch 1 oder einem der weiteren Ansprüche, **dadurch gekennzeichnet, dass** die Beladung und/oder Achslast durch wenigstens einen Sensor detektiert wird, insbesondere mittelbar durch Druck- oder Wegsensoren, und dass die Anzeige der Beladung/Achslast aktiviert wird, sobald ein oder mehrere Sensoren eine Überschreitung eines definierten unteren Grenzwerts detektieren oder eine Erhöhung der Beladung/Achslast um einen definierten Betrag detektieren.

5. Verfahren nach Anspruch 4, **dadurch gekennzeichnet, dass** die Anzeige der Beladung/Achslast aktiviert wird, sobald der wenigstens eine Sensor eine Erhöhung der Beladung/Achslast um etwa 20% detektiert oder sobald der Sensor eine Überschreitung von 20% des zulässigen Maximums detektiert.

6. Verfahren nach Anspruch 1 oder einem der weiteren Ansprüche, **dadurch gekennzeichnet, dass** eine Überlast gemäß Zustand c) erst dann angezeigt wird, wenn das zulässige Maximum um einen definierten Betrag überschritten ist, insbesondere um etwa 2%.

7. Vorrichtung zur Anzeige der Beladung und/oder der Achslast eines Fahrzeugs beim Beladen desselben, zur Durchführung eines Verfahrens nach einem der Ansprüche 1 bis 6, in Verbindung mit einer optischen oder einer akustischen Signalquelle (14) und wenigstens einem Sensor zur zumindest mittelbaren Erfassung der Beladung/Achslast, wobei eine Steuereinheit (12) zur Verarbeitung von Daten des Sensors und zur Ansteuerung der Signalquelle (14) vorgesehen ist, **dadurch gekennzeichnet, dass** mit der Steuereinheit (12) die Signalquelle (14) zur Ausgabe von Signalen wie folgt ansteuerbar ist:
- Ausgabe eines Dauersignals bei Erreichen eines zulässigen Maximums an Beladung/Achslast,
- Ausgabe eines pulsierenden Signals bei überschrittenem zulässigen Maximum.

8. Vorrichtung nach Anspruch 7, **dadurch gekennzeichnet, dass** die Steuereinheit (12) über eine Leitung (15) oder eine Datenschnittstelle mit wenigstens einer optischen und/oder akustischen Signalquelle (14) verbunden ist.

9. Vorrichtung nach Anspruch 7 oder 8, **dadurch gekennzeichnet, dass** der Steuereinheit (12) wenigstens ein Sensor zur zumindest mittelbaren Erfassung der Beladung/Achslast zugeordnet ist, insbesondere mit einer Verbindung über eine Leitung oder Datenschnittstelle.

10. Steuergerät für die Ansteuerung von einer optischen oder akustischen Signalquelle (14), für die Durchführung des Verfahrens gemäß den Ansprüchen 1 bis 6, wobei unterschiedliche Signale vorgesehen sind für die Zustände
a) Achslast/Beladung unterhalb eines zulässigen Maximums,
b) zulässiges Maximum erreicht,
c) zulässiges Maximum überschritten/Überlast,
**dadurch gekennzeichnet, dass** durch das Steuergerät bei Erreichen des zulässigen Maximums die Signalquelle zur Ausgabe eines Dauersignals ansteuerbar ist, und dass die Signalquelle bei Überlast zur Ausgabe eines pulsierenden Signals ansteuerbar ist.

11. Fahrzeug, insbesondere Zugfahrzeug, Anhängefahrzeug, Auflieger (10) oder Muldenkipperfahrzeug, mit einer Vorrichtung nach einem der Ansprüche 7 bis 10.

12. Fahrzeug nach Anspruch 11, **gekennzeichnet durch** eine Signalquelle (14) nahe einem Fahrzeugheck, nämlich seitlich, insbesondere links und im Bereich eines hinteren Fahrzeug-Drittels.

## Claims

1. Method for displaying the load and/or the axial load of a vehicle when loading said vehicle, using one or more optical and/or acoustic signals sources (14), wherein different signals are provided for the states
a) the axial load/load below a permissible maximum,
b) permissible maximum reached,
c) permissible maximum exceeded/overload,
wherein when the permissible maximum is reached, a continuous signal is output, and in that in the case of an overload a pulsating signal is output, wherein, during the state a) - in the case of a load/axial load below the permissible maximum - a pulsating signal is output, in particular with a frequency which increases as a function of the load/axial load, **characterized in that** the pulsating signal according to state a) pulsates in a different way than the pulsating signal according to state c), wherein the pulsating signal according to state a) has a different ratio of the switch-on phase to the switch-off phase than the pulsating signal according to state c), in particular has a larger ratio of the switch-on phase to the switch-off phase.

2. Method according to Claim 1, **characterized in that** the pulsating signal according to state a) has approximately equally long switch-on and switch-off phases, and **in that** the pulsating signal according to state c) has shorter switch-on phases than switch-off phases, in particular a ratio of 1 to 3 or 1 to a number which is greater than 3.

3. Method according to Claim 1 or one of the further claims, **characterized in that** the signal according to state c) is at least frequency-modulated, and **in that** the signal according to state a) is preferably only amplitude-modulated.

4. Method according to Claim 1 or one of the further claims, **characterized in that** the load and/or axial load is detected by at least one sensor, in particular indirectly by pressure sensors or travel sensors, and **in that** the display of the load/axial load is activated as soon as one or more sensors detect that a defined lower limiting value has been exceeded or detect an increase of the load/axial load by a defined absolute value.

5. Method according to Claim 4, **characterized in that** the display of the load/axial load is activated as soon as the at least one sensor detects an increase in the load/axial load by approximately 20% or as soon as the sensor detects that the permissible maximum is exceeded by 20%.

6. Method according to Claim 1 or one of the further claims, **characterized in that** an overload according to state c) is not displayed until the permissible maximum exceeds a defined absolute value, in particular by approximately 2%.

7. Device for displaying the load and/or the axial load of a vehicle when loading said vehicle, for carrying out a method according to one of Claims 1 to 6, in conjunction with an optical or an acoustic signal source (14) and at least one sensor for at least indirectly sensing the load/axial load, wherein a control unit (12) is provided for processing data of the sensor and for actuating the signal source (14), **characterized in that** the signal source (14) can be actuated with the control unit (12) in order to output signals as follows:
- outputting a continuous signal when a permissible maximum load/axial load is reached,
- outputting a pulsating signal when a permissible maximum is exceeded.

8. Device according to Claim 7, **characterized in that** the control unit (12) is connected to at least one optical and/or acoustic signal source (14) via a line (15) or a data interface.

9. Device according to Claim 7 or 8, **characterized in that** at least one sensor for at least indirectly sensing the load/axial load is assigned to the control unit (12), in particular with a connection via a line or data interface.

10. Control device for actuating an optical or acoustic signal source (14) for carrying out the method according to Claims 1 to 6, wherein different signals are provided for the states
a) axial load/load below a permissible maximum,
b) permissible maximum reached,
c) permissible maximum exceeded/overload,
**characterized in that** when the permissible maximum is reached the control device can actuate the signal sources to output a continuous signal, and **in that** in the case of an overload the signal source can be actuated to output a pulsating signal.

11. Vehicle, in particular traction vehicle, trailer vehicle, semitrailer (10) or dump truck, having a device according to one of Claims 7 to 10.

12. Vehicle according to Claim 11, **characterized by** a signal source (14) near to the rear of a vehicle, specifically to the side, in particular to the left and in the region of a rear third of the vehicle.

## Revendications

1. Procédé pour afficher le chargement et/ou la charge sur essieu d'un véhicule lors de son chargement, en utilisant une ou plusieurs sources de signaux optiques et/ou acoustiques (14), dans lequel différents signaux sont prévus pour les états suivants :
a) charge sur essieu/chargement inférieur à un maximum admissible,
b) maximum admissible atteint,
c) maximum admissible dépassé/surcharge,
dans lequel un signal continu est émis lors de l'atteinte du maximum admissible et un signal puisé est émis lors d'une surcharge, dans lequel, pendant l'état a) - pour un chargement/une charge sur essieu inférieur au maximum admissible - un signal puisé est émis, en particulier à une fréquence augmentant en fonction du chargement/de la charge sur essieu, **caractérisé en ce que** le signal puisé conformément à l'état a) présente des impulsions différentes du signal puisé conformément à l'état c), dans lequel le signal puisé conformément à l'état a) présente un rapport différent de la phase d'activation à la phase de désactivation que le signal puisé conformément à l'état c), en particulier un rapport plus élevé de la phase d'activation à la phase de désactivation.

2. Procédé selon la revendication 1, **caractérisé en ce que** le signal puisé conformément à l'état a) présente des phases d'activation et des phases de désactivation de longueurs approximativement égales, et **en ce que** le signal puisé conformément à l'état c) présente des phases d'activation plus courtes que les phases de désactivation, en particulier dans un rapport de 1 à 3 ou de 1 à un nombre supérieur à 3.

3. Procédé selon la revendication 1 ou l'une des autres revendications, **caractérisé en ce que** le signal conforme à l'état c) est au moins modulé en fréquence et **en ce que** le signal conforme à l'état a) est de préférence uniquement modulé en amplitude.

4. Procédé selon la revendication 1 ou l'une des autres revendications, **caractérisé en ce que** le chargement et/ou la charge sur essieu est détecté par au moins un capteur, en particulier indirectement par des capteurs de pression ou de déplacement, et **en ce que** l'affichage du chargement/de la charge sur essieu est activé dès qu'un ou plusieurs capteurs détectent un dépassement d'une valeur limite inférieure définie ou une augmentation du chargement/de la charge sur essieu d'une quantité définie.

5. Procédé selon la revendication 4, **caractérisé en ce que** l'affichage du chargement/de la charge sur essieu est activé dès que l'au moins un capteur détecte une augmentation du chargement/de la charge sur essieu d'environ 20 % ou dès que le capteur détecte un dépassement de 20 % du maximum admissible.

6. Procédé selon la revendication 1 ou l'une des autres revendications, **caractérisé en ce qu'**une surcharge conforme à l'état c) n'est affichée que lorsque le maximum admissible est dépassé d'une quantité définie, en particulier d'environ 2 %.

7. Dispositif destiné à afficher le chargement et/ou la charge sur essieu d'un véhicule lors de son chargement, pour mettre en oeuvre un procédé selon l'une des revendications 1 à 6, en liaison avec une source de signal optique ou acoustique (14) et au moins un capteur destiné à détecter au moins indirectement le chargement/la charge sur essieu, dans lequel il est prévu une unité de commande (12) destinée à traiter des données du capteur et à commander la source de signal (14), **caractérisé en ce que** la source de signal (14) peut être commandée par l'unité de commande (12) pour émettre des signaux de la manière suivante :
- émission d'un signal continu lors de l'atteinte d'un maximum admissible de chargement/de charge sur essieu,
- émission d'un signal puisé lors du dépassement du maximum admissible.

8. Dispositif selon la revendication 7, **caractérisé en ce que** l'unité de commande (12) est reliée par l'intermédiaire d'une ligne (15) ou d'une interface de données à au moins une source de signal optique et/ou acoustique (14).

9. Dispositif selon la revendication 7 ou 8, **caractérisé en ce que** l'unité de commande (12) est associée à au moins un capteur pour détecter au moins indirectement le chargement/la charge sur essieu, en particulier au moyen d'une liaison par l'intermédiaire d'une ligne ou d'une interface de données.

10. Appareil de commande destiné à commander une source de signal optique ou acoustique (14) pour la mise en oeuvre du procédé selon les revendications 1 à 6, dans lequel différents signaux sont prévus pour les états suivants :
a) charge sur essieu/chargement inférieur à un maximum admissible,
b) maximum admissible atteint,
c) maximum admissible dépassé/surcharge,
**caractérisé en ce que** la source de signal peut être commandée par l'appareil de commande pour émettre un signal continu lorsque le maximum admissible est atteint, et **en ce que** la source de signal peut être commandée pour émettre un signal puisé en cas de surcharge.

11. Véhicule, en particulier véhicule tracteur, véhicule remorque, semi-remorque (10) ou camion benne, comportant un dispositif selon l'une des revendications 7 à 10.

12. Véhicule selon la revendication 11, **caractérisé par** une source de signal (14) à proximité de l'arrière d'un véhicule, c'est-à-dire latéralement, en particulier à gauche et dans la région d'un tiers arrière du véhicule.
